# EUROPEAN PATENT APPLICATION

(11) **EP 3 385 141 A1**
(43) Date of publication of application: **10.10.2018**
(21) Application number: 17185032.4
(22) Date of filing: 04.08.2017
(51) Int. Cl.: B61D 19/02, B64C 1/14, B64C 1/32, B60J 10/36, B60J 10/70

(54) **PUSH-OUT BUBBLE WINDOW FOR ROTARY AIRCRAFT**

(30) Priority: 07.04.2017 US 201715482594
(71) Applicant: Bell Helicopter Textron Inc., Fort Worth, TX 76101 (US)
(72) Inventor: HILL, Matthew John, Keller, TX 76248 (US); TOHLEN, William David, Coppell, TX 75019 (US); MOSIER, Bobby Howard, Keller, TX 76244 (US); ESCHETE, Lynn Francis, Arlington, TX 76016 (US)
(74) Representative: Barker Brettell LLP

(57) **Abstract**

Aspects of the embodiments of the present disclosure are directed to a window panel (304) having a bubble form. The window panel (304) is a push-out window that permits emergency egress from an aircraft (302), such as a rotorcraft. The bubble form is designed and selected such that the window panel (304) will remain secured in a window frame of the aircraft (302) at a level cruising speed of 120 knots true air speed. In embodiments, the window panel (304) remains secured in the window frame at 120 knots true airspeed and a sideslip of at least 6 degrees.

## Description

### TECHNICAL FIELD

This disclosure relates generally to a push-out bubble window, and more particularly, though not exclusively, to a push-out bubble window for rotary aircraft.

### BACKGROUND

Rotary aircraft, such as helicopters, benefit from safety features, such as easy access to emergency exits and increased visibility. One example of making emergency exits more accessible is to use a push-out (or pop-out) emergency exit window. A push-out window can be removed by a pushing force from a pilot or passenger to allow for emergency egress from an aircraft cabin. The simplicity of a push-out window for emergency egress can increase the speed and ease of exiting an aircraft.

### SUMMARY

According to one aspect of the present disclosure, a rotorcraft can include a window frame on a side panel of the rotorcraft; a window including a transparent bubble form, the window secured to the window frame by a gasket; wherein the gasket includes a first receiving portion that envelopes an inner side and an outer side of the window frame and a second receiving portion that envelopes an inner side and an outer side of the window.

In some embodiments, wherein the window frame and the window are part of an emergency egress system, the rotorcraft including a plurality emergency egress systems, at least one of which is proximate a pilot's seating position, each of the emergency egress systems including a window including a bubble form secured in a window frame by a gasket, the gasket securing the window in the window frame at level cruising speeds of at least 120 ktas.

In some embodiments, the gasket further includes a filler strip on an outboard side of the gasket, the filler strip filling a gap in the gasket to push the first receiving portion against the outer side of the window frame and push the second receiving portion against the outer side of the window.

In some embodiments, the gasket is configured to secure the window in the window frame at an inboard to outboard pressure of 0.25 psi.

In some embodiments, the bubble form provides enhanced field of view from an inboard position of the rotorcraft.

In some embodiments, the window is configured to be pushed out of the window frame to provide emergency egress from the rotorcraft.

In some embodiments, the window is configured to be pushed out by a force in the range of 40 to 55 pound-force (lbf) at static equilibrium.

In some embodiments, the gasket is configured to secure the window in the window frame at a level cruising speed of 120 knots true airspeed.

In some embodiments, the bubble form is configured to allow the window to remain secured in the window frame by the gasket at an aero push out force of at least 179 lbf.

In some embodiments, the bubble form is configured to allow the window to remain secured in the window frame by the gasket at a sideslip angle of at least 6 degrees.

In some embodiments, the bubble form is configured to allow the window to remain secured in the window frame by the gasket at a sideslip angle of at least 15 degrees.

In some embodiments, the window frame and the window are positioned proximate a pilot's seating position on the rotorcraft.

Aspects of the embodiments are directed to a window panel including a bubble form; and an airframe panel including an opening, the window panel being removably secured in the opening of the airframe panel by a gasket.

In some embodiments, the gasket is configured to secure the window in the airframe panel opening at a level cruising speed of 120 knots true airspeed.

In some embodiments, the bubble form is configured to allow the window to remain secured in the airframe panel opening by the gasket at an aero push out force of at least 179 lbf.

In some embodiments, the bubble form is configured to allow the window to remain secured in the airframe panel opening by the gasket at a sideslip angle of at least 6 degrees.

In some embodiments, the bubble form is configured to allow the window to remain secured in the airframe panel opening by the gasket at a sideslip angle of at least 15 degrees.

In some embodiments, the window is configured to be pushed out of the airframe panel by a force in the range of 40 to 55 pound-force (lbf) at static equilibrium.

In some embodiments, the airframe panel is an exterior panel of a rotorcraft.

Aspects of the embodiments are directed to an emergency egress system for a rotorcraft, the emergency egress system can include a window panel including a bubble form; and a gasket to secure the window in a window frame of an aircraft exterior panel, the gasket configured to permit the window panel to be pushed out of the aircraft exterior panel by a force in the range of 40 to 55 pound-force (lbf) at static equilibrium and secure the window panel in the aircraft exterior panel at a level cruising speed of 120 knots true airspeed.

### BRIEF DESCRIPTION OF THE DRAWINGS

FIGS. 1A-1B are schematic diagrams of an example aircraft in accordance with embodiments of the present disclosure.
FIG. 2 is a schematic diagram of another example aircraft in accordance with embodiments of the present disclosure.
FIGS. 3A-3B are schematic diagrams of various views of an example aircraft that includes a push-out bubble window in accordance with embodiments of the present disclosure.
FIGS. 4A-4B are schematic diagrams of an example gasket for securing a bubble window into a window frame of a rotorcraft airframe in accordance with embodiments of the present disclosure.
FIG. 5 is a schematic diagram of a rotorcraft that includes a plurality of push-out bubble windows in accordance with embodiments of the present disclosure.
FIG. 6A-6B are schematic diagrams of example bubble window configurations in accordance with embodiments of the present disclosure.
FIGS. 7A-7B are schematic diagrams of an example push-out bubble window 700 in accordance with embodiments of the present disclosure.
FIGS. 8A-8F are schematic diagrams of example bubble window configurations for the aircraft 302 in accordance with embodiments of the present disclosure.

### DETAILED DESCRIPTION

The following disclosure describes various illustrative embodiments and examples for implementing the features and functionality of the present disclosure. While particular components, arrangements, and/or features are described below in connection with various example embodiments, these are merely examples used to simplify the present disclosure and are not intended to be limiting. It will of course be appreciated that in the development of any actual embodiment, numerous implementation-specific decisions must be made to achieve the developer's specific goals, including compliance with system, business, and/or legal constraints, which may vary from one implementation to another. Moreover, it will be appreciated that, while such a development effort might be complex and time-consuming, it would nevertheless be a routine undertaking for those of ordinary skill in the art having the benefit of this disclosure.

In the specification, reference may be made to the spatial relationships between various components and to the spatial orientation of various aspects of components as depicted in the attached drawings. However, as will be recognized by those skilled in the art after a complete reading of the present disclosure, the devices, components, members, apparatuses, etc. described herein may be positioned in any desired orientation. Thus, the use of terms such as "above," "below," "upper," "lower," or other similar terms to describe a spatial relationship between various components or to describe the spatial orientation of aspects of such components, should be understood to describe a relative relationship between the components or a spatial orientation of aspects of such components, respectively, as the components described herein may be oriented in any desired direction.

Further, the present disclosure may repeat reference numerals and/or letters in the various examples. This repetition is for the purpose of simplicity and clarity and does not in itself dictate a relationship between the various embodiments and/or configurations discussed.

Example embodiments that may be used to implement the features and functionality of this disclosure will now be described with more particular reference to the attached Figures.

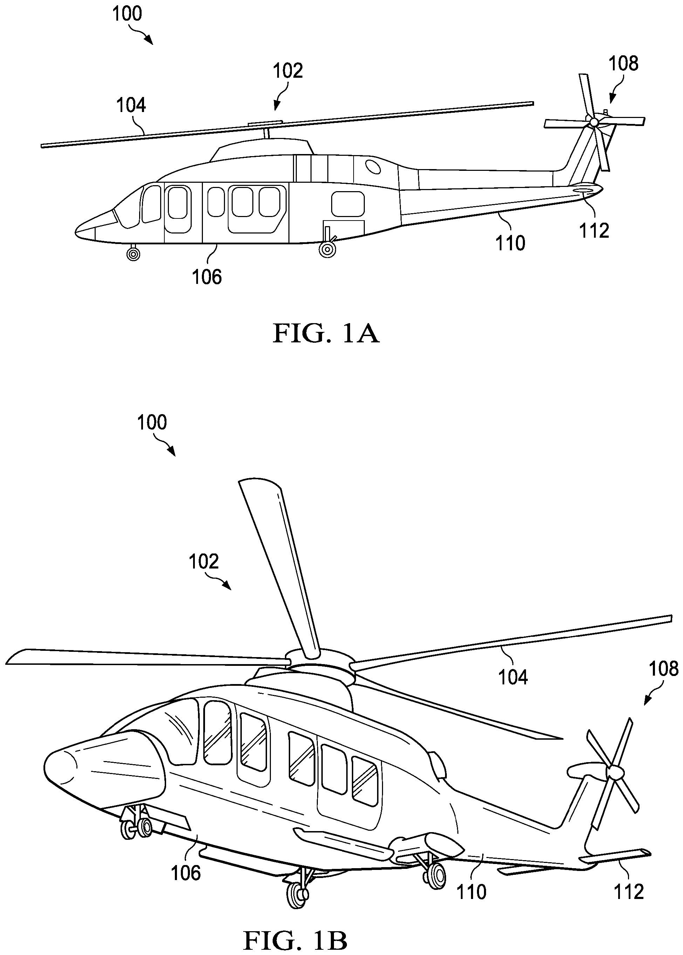

FIG. 1A-1B illustrate an example embodiment of a rotorcraft 100. FIG. 1A portrays a side view of rotorcraft 100, while FIG. 1B portrays an isometric view of rotorcraft 100. Rotorcraft 100 includes a rotor system 102 with a plurality of rotor blades 104. The pitch of each rotor blade 104 can be managed or adjusted in order to selectively control direction, thrust, and lift of rotorcraft 100. Rotorcraft 100 further includes a fuselage 106, tail rotor or anti-torque system 108, an empennage 110, and a tail structure 112. In the illustrated embodiment, tail structure 112 may be used as a horizontal stabilizer. Torque is supplied to rotor system 102 and anti-torque system 108 using at least one engine.

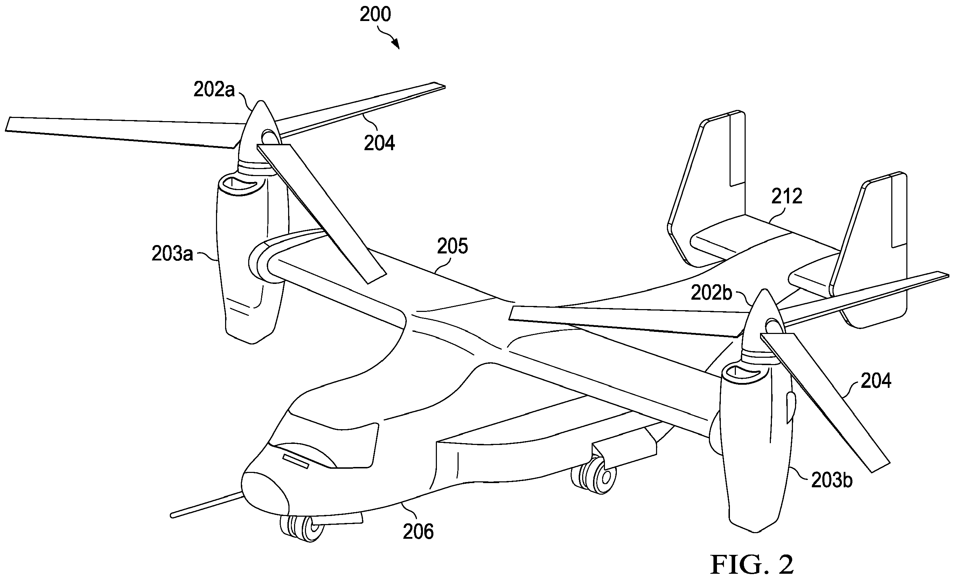

FIG. 2 illustrates a perspective view of an example tiltrotor aircraft 200. Tiltrotor aircraft 200 includes nacelles 203a and 203b, a wing 205, a fuselage 206, and a tail structure 212. Nacelles 203a and 203b respectively include rotor systems 202a and 202b, and each rotor system 202a and 202b includes a plurality of rotor blades 204. Moreover, each nacelle 203a and 203b may include an engine and gearbox for driving rotor systems 202a and 202b, respectively. In some embodiments, nacelles 203a and 203b may each be configured to rotate between a helicopter mode, in which the nacelles 203a and 203b are approximately vertical, and an airplane mode, in which the nacelles 203a and 203b are approximately horizontal. In the illustrated embodiment, tail structure 212 may be used as a vertical stabilizer.

It should be appreciated that rotorcraft 100 of FIGS. 1A-1B and tiltrotor aircraft 200 of FIG. 2 are merely illustrative of a variety of aircraft that can be used to implement embodiments of the present disclosure. Other aircraft implementations can include, for example, fixed wing airplanes, hybrid aircraft, unmanned aircraft, gyrocopters, a variety of helicopter configurations, and drones, among other examples. Moreover, it should be appreciated that even though aircraft are particularly well suited to implement embodiments of the present disclosure, the described embodiments can also be implemented using non-aircraft vehicles and devices.

This disclosure describes a push-out bubble window on a rotary aircraft that can provide emergency egress from an aircraft and that includes a bubble that allows a pilot or other passenger to have a greater field of view outside of the aircraft. The push-out bubble window is aerodynamically designed to remain seated in a seal of an aircraft exterior panel or door without becoming unseated at level cruise speeds up to and including 120 knots true airspeed (ktas), while still being able to be pushed out by a pilot or passenger for emergency egress.

At level cruising speeds of upwards of 120 ktas, the pressure differential of the air within the cabin and the airflow across a push-out window can cause the window to be pushed out during flight. The push-out window can be sealed in place using a seal or gasket that secures the push-out window in a window frame. The seal or gasket can be selected based, at least in part, on the design of the observation bubble used for the window.

The embodiments described throughout this disclosure provide numerous technical advantages. Among the advantages includes accessible emergency egress of the aircraft, increased visibility, and level cruise speeds of at least 120 ktas.

Example embodiments that may be used to implement a push-out bubble window are described below with more particular reference to the remaining FIGURES.

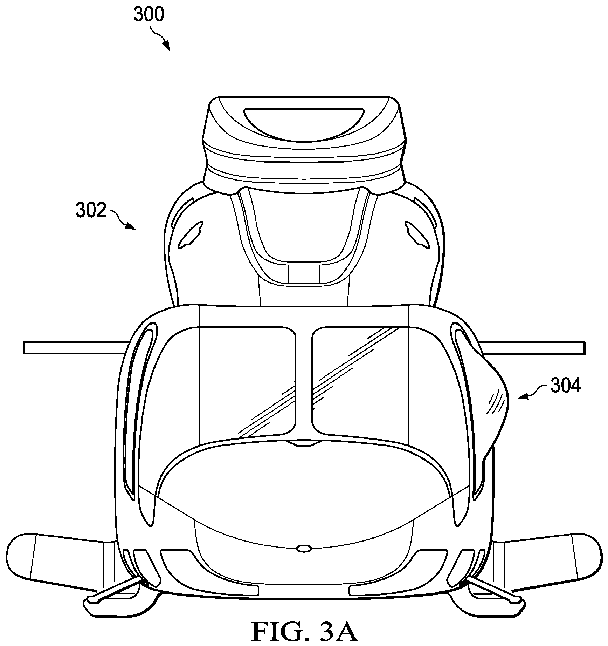

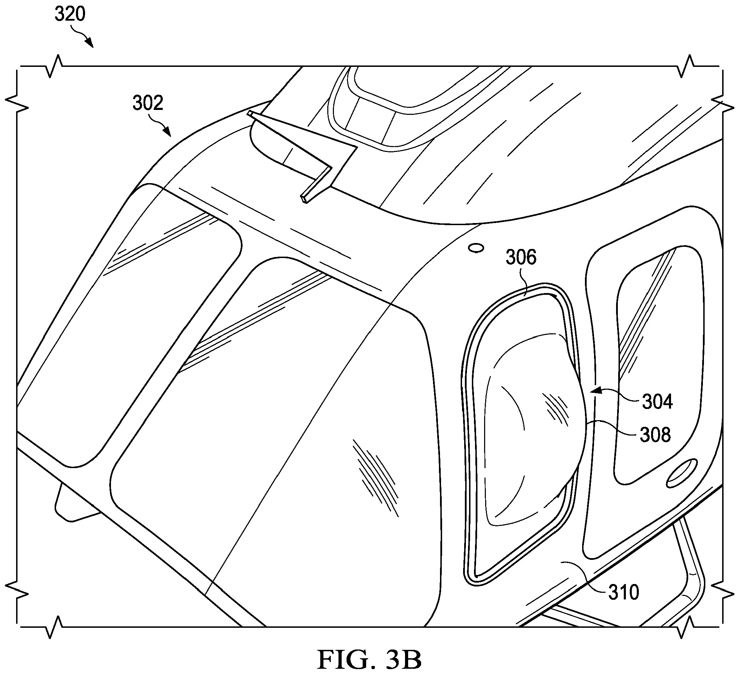

FIGS. 3A-3B illustrate various views of an example aircraft that includes a push-out bubble window in accordance with embodiments of the present disclosure. FIG. 3A is a front view 300 of a rotary aircraft 302 that includes a push-out bubble window 304 in accordance with embodiments of the present disclosure. FIG. 3B is an isometric view 320 of the rotary aircraft 302 showing the push-out bubble window 304. The push-out bubble window 304 can be secured into a window frame on an exterior panel 310 a seal 306.

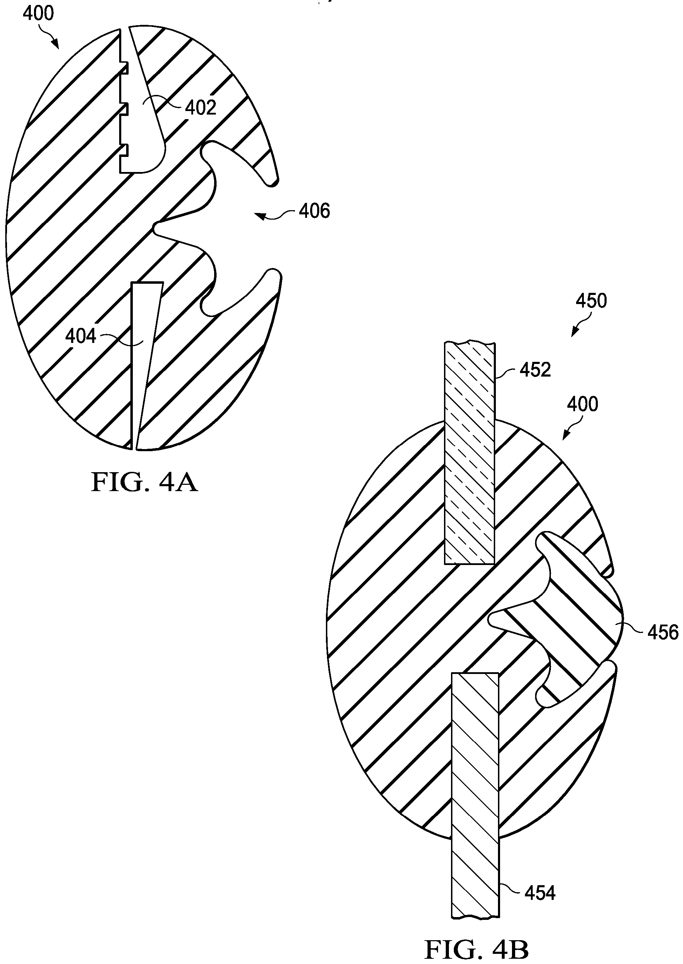

FIGS. 4A-4B are schematic diagrams of an example gasket for securing a bubble window into a window frame of a rotorcraft airframe in accordance with embodiments of the present disclosure. FIG. 4A illustrates an example gasket design. The gasket 400 includes a first receiving portion 402 and a second receiving portion 404. The first receiving portion 402 can receive a window panel 452 (shown in FIG. 4B). The first receiving portion 402 can include a plurality of teeth for grasping the window panel 452. The first receiving portion 402 also can include a curved based to allow the window panel to be pushed outward. The gasket 400 can include a gap 406 that can be filled by a filler strip 456.

The gasket 400 can be secured to a window frame or opening in an exterior panel (referred to as a body panel 454) by the second receiving portion 404. The gasket design can be selected based on the structure of the body panel 454. The gasket 400 can be made from extruded silicone rubber or other suitable material.

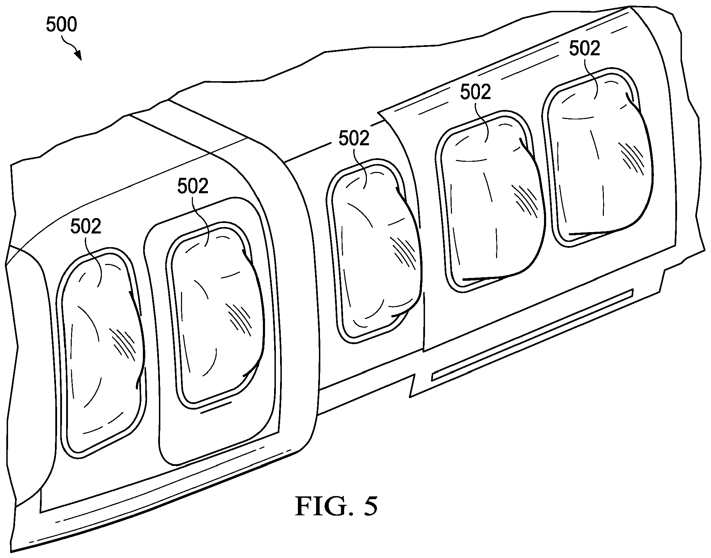

FIG. 5 is a schematic diagram of a rotorcraft that includes a plurality of push-out bubble windows in accordance with embodiments of the present disclosure. The rotorcraft 500 can be similar to rotorcraft 302. The rotorcraft 500 can include a plurality of push-out bubble windows 502 at various locations on the side of the fuselage.

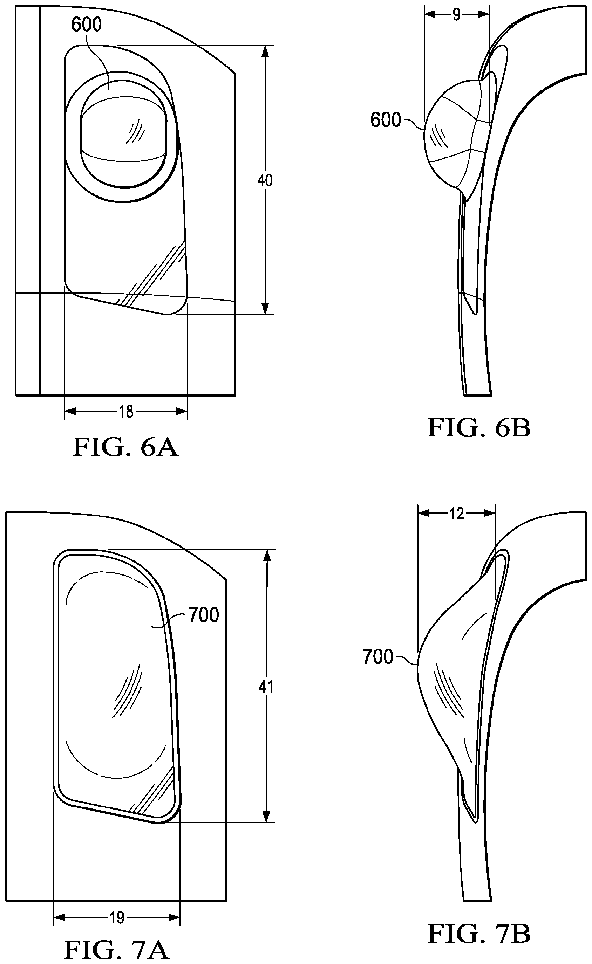

FIGS. 6A-6B are schematic diagrams of a bubble window 600 that can be used for non-push-out applications. As shown in FIG. 6A, the bubble window 600 can include a total width of 18 inches and a height of 40 inches. FIG. 6B illustrates that the bubble window includes a bubble that extends 9 inches from the surface of the window 600. The bubble window can be centered in the window pane. In embodiments, the bubble window can be offset from the center by 2 to 10 inches.

FIGS. 7A-7B are schematic diagrams of an example push-out bubble window 700 in accordance with embodiments of the present disclosure. As shown in FIG. 7A, the example push-out bubble window 700 includes a maximum width of 19 inches and a maximum height of 41 inches. FIG. 7B shows that the example bubble window includes a bubble that extends 12 inches from the surface of the window 700.

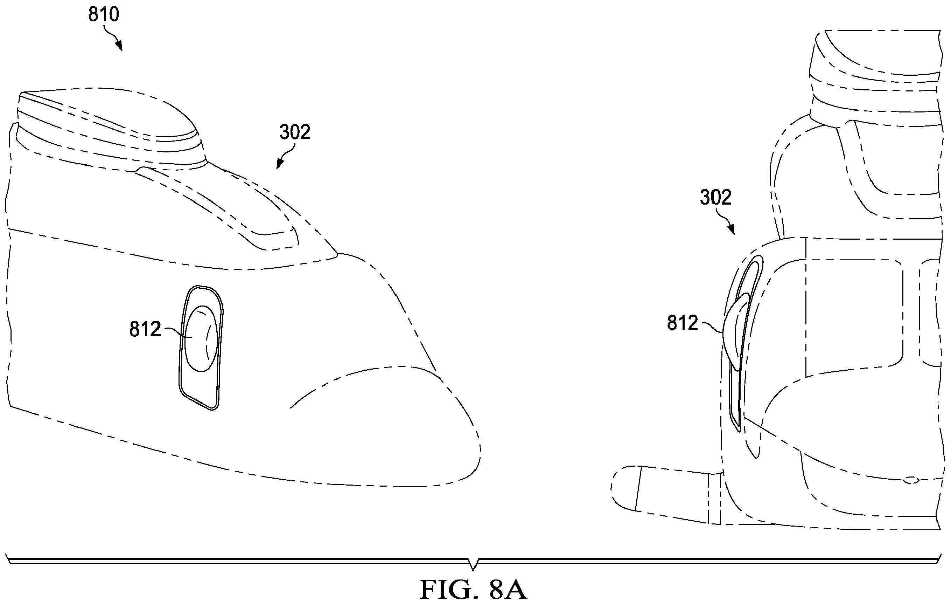

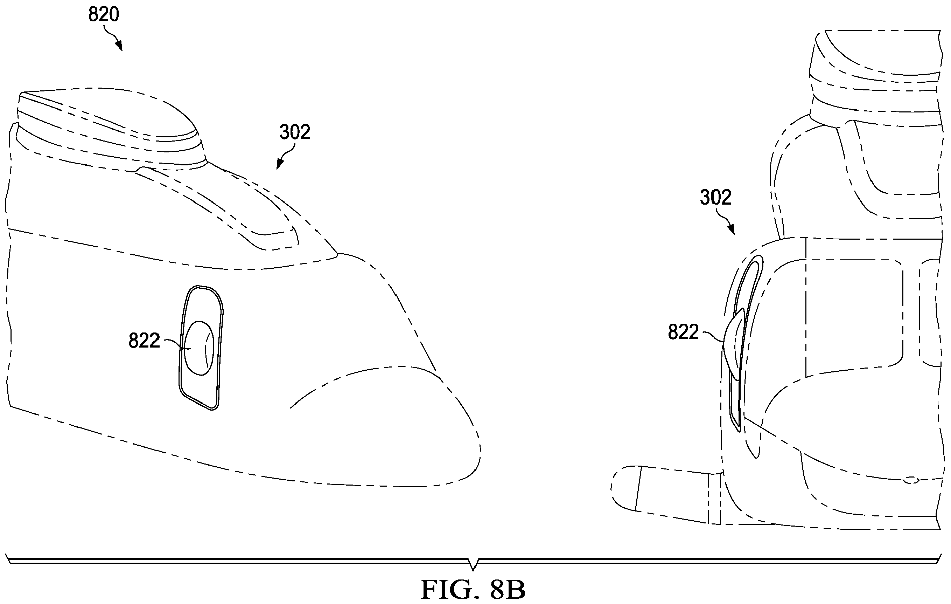

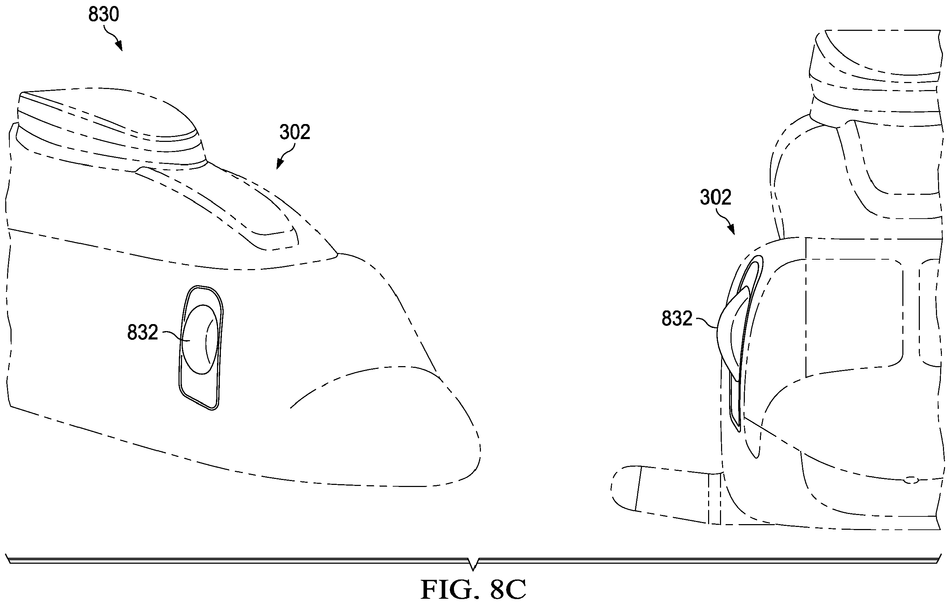

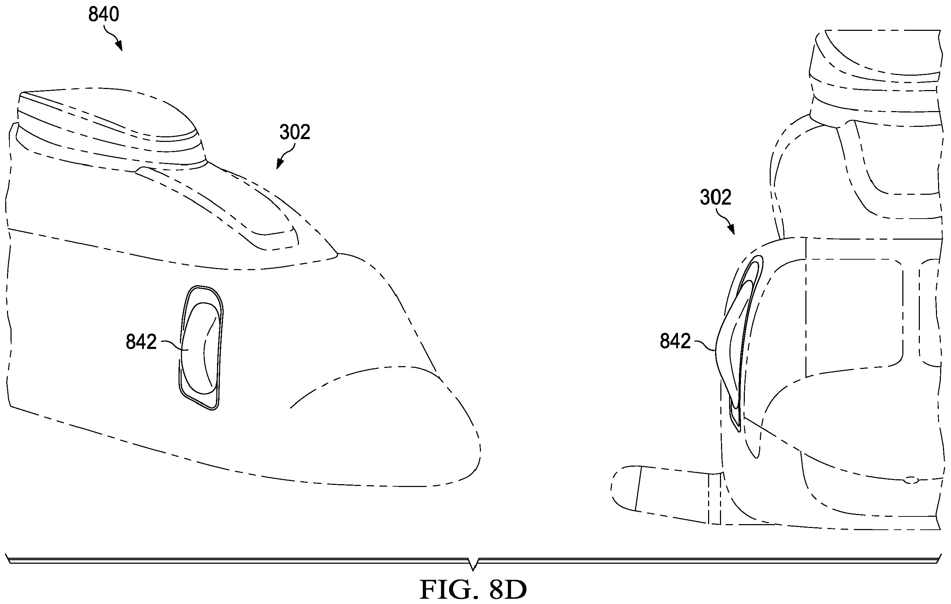

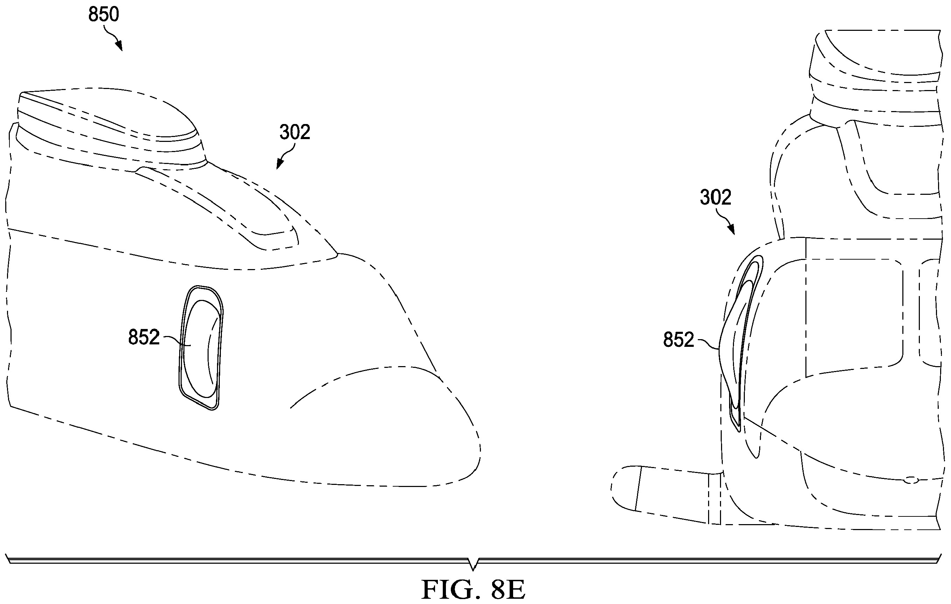

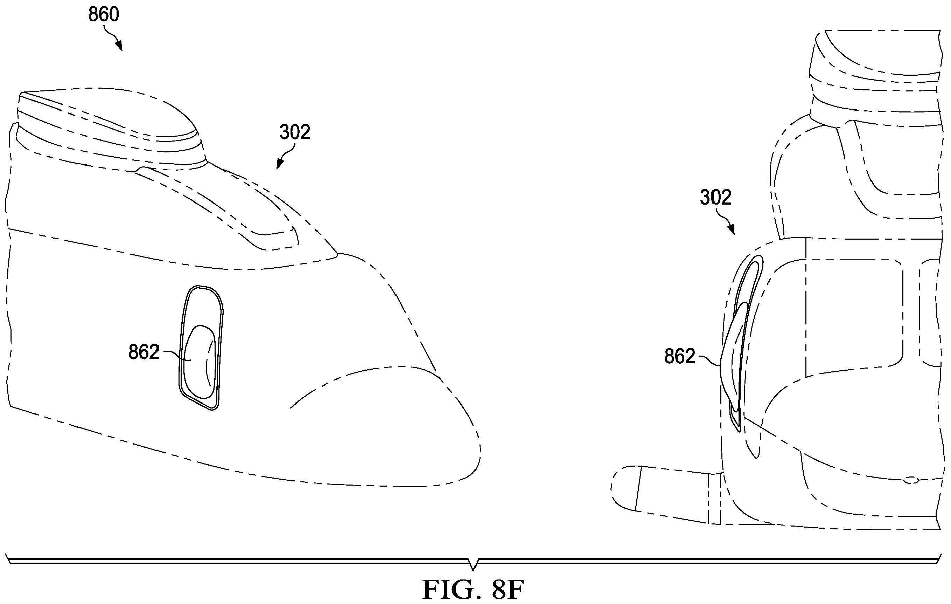

FIGS. 8A-8F are schematic diagrams of example bubble window configurations for the aircraft 302 in accordance with embodiments of the present disclosure. FIG. 8A is a schematic diagram of an example push-out bubble window 812 in accordance with embodiments of the present disclosure. The push-out bubble window 812 includes a bubble that is 4.5 inches inward of the bubble window 600 of FIGS. 6A-B. FIG. 8B is a schematic diagram of an example push-out bubble window 822 in accordance with embodiments of the present disclosure. The push-out bubble window 822 includes a bubble that is 4.5 inches inward, 3 inches down, and 1 inch aft of the bubble window 600 of FIGS. 6A-B. FIG. 8C is a schematic diagram of an example push-out bubble window 832 in accordance with embodiments of the present disclosure. The push-out bubble window 832 includes a bubble that is 3 inches inward and 1 inch aft of the bubble window 600 of FIGS. 6A-B. FIG. 8D is a schematic diagram of an example push-out bubble window 842 in accordance with embodiments of the present disclosure. The push-out bubble window 842 includes a bubble that is 3 inches inward of the bubble window 600 of FIGS. 6A-B. FIG. 8E is a schematic diagram of an example push-out bubble window 852 in accordance with embodiments of the present disclosure. The push-out bubble window 852 includes a bubble that is 4 inches inward of the bubble window 600 of FIGS. 6A-B. FIG. 8F is a schematic diagram of an example push-out bubble window 862 in accordance with embodiments of the present disclosure. The push-out bubble window 862 includes a bubble that is 4 inches inward and moved downwards by 1-4 inches downward of the bubble window 600 of FIGS. 6A-B.

The diagrams in the FIGURES illustrate the architecture, functionality, and operation of possible implementations of various embodiments of the present disclosure. It should also be noted that, in some alternative implementations, the function(s) associated with a particular block may occur out of the order specified in the FIGURES. For example, two blocks shown in succession may, in fact, be executed substantially concurrently, or the blocks may sometimes be executed in the reverse order or alternative orders, depending upon the functionality involved.

Although several embodiments have been illustrated and described in detail, numerous other changes, substitutions, variations, alterations, and/or modifications are possible without departing from the spirit and scope of the present invention, as defined by the appended claims. The particular embodiments described herein are illustrative only, and may be modified and practiced in different but equivalent manners, as would be apparent to those of ordinary skill in the art having the benefit of the teachings herein. Those of ordinary skill in the art would appreciate that the present disclosure may be readily used as a basis for designing or modifying other embodiments for carrying out the same purposes and/or achieving the same advantages of the embodiments introduced herein. For example, certain embodiments may be implemented using more, less, and/or other components than those described herein. Moreover, in certain embodiments, some components may be implemented separately, consolidated into one or more integrated components, and/or omitted. Similarly, methods associated with certain embodiments may be implemented using more, less, and/or other steps than those described herein, and their steps may be performed in any suitable order.

Numerous other changes, substitutions, variations, alterations, and modifications may be ascertained to one of ordinary skill in the art and it is intended that the present disclosure encompass all such changes, substitutions, variations, alterations, and modifications as falling within the scope of the appended claims.

In order to assist the United States Patent and Trademark Office (USPTO), and any readers of any patent issued on this application, in interpreting the claims appended hereto, it is noted that: (a) Applicant does not intend any of the appended claims to invoke paragraph (f) of 35 U.S.C. § 112, as it exists on the date of the filing hereof, unless the words "means for" or "steps for" are explicitly used in the particular claims; and (b) Applicant does not intend, by any statement in the specification, to limit this disclosure in any way that is not otherwise expressly reflected in the appended claims.

## Claims

1. A rotorcraft comprising:
a window frame on a side panel of the rotorcraft;
a window comprising a transparent bubble form, the window secured to the window frame by a gasket; wherein
the gasket comprises a first receiving portion that envelopes an inner side and an outer side of the window frame and a second receiving portion that envelopes an inner side and an outer side of the window.

2. The rotorcraft of claim 1, wherein the window frame and the window are part of an emergency egress system, the rotorcraft comprising a plurality emergency egress systems, at least one of which is proximate a pilot's seating position, each of the emergency egress systems comprising a window comprising a bubble form secured in a window frame by a gasket, the gasket securing the window in the window frame at level cruising speeds of at least 120 knots true airspeed.

3. The rotorcraft of claim 1 or of claim 2, wherein the gasket further comprises a filler strip on an outboard side of the gasket, the filler strip filling a gap in the gasket to push the first receiving portion against the outer side of the window frame and push the second receiving portion against the outer side of the window.

4. The rotorcraft of claim 1 or of claim 2 or of claim 3, wherein the gasket is configured to secure the window in the window frame at an inboard to outboard pressure of 0.25 psi.

5. The rotorcraft of claim 1 or of any of claims 2 to 4, wherein the bubble form provides enhanced field of view from an inboard position of the rotorcraft.

6. The rotorcraft of claim 1 or of any of claims 2 to 5, wherein the window is configured to be pushed out of the window frame to provide emergency egress from the rotorcraft.

7. An apparatus comprising:
a window panel comprising a bubble form; and
an airframe panel comprising an opening, the window panel being removably secured in the opening of the airframe panel by a gasket.

8. The rotorcraft of claim 6, wherein the window is configured to be pushed out by a force in the range of 40 to 55 pound-force (lbf) at static equilibrium; or
the apparatus of claim 7, wherein the window is configured to be pushed out of the airframe panel by a force in the range of 40 to 55 pound-force (lbf) at static equilibrium.

9. The rotorcraft of claim 1 or of any preceding rotorcraft claim, wherein the gasket is configured to secure the window in the window frame at a level cruising speed of 120 knots true airspeed; or
the apparatus of claim 7 or of claim 8, wherein the gasket is configured to secure the window in the airframe panel opening at a level cruising speed of 120 knots true airspeed.

10. The rotorcraft of claim 9, wherein the bubble form is configured to allow the window to remain secured in the window frame by the gasket at an aero push out force of at least 179 lbf; or
the apparatus of claim 9, wherein the bubble form is configured to allow the window to remain secured in the airframe panel opening by the gasket at an aero push out force of at least 179 lbf.

11. The rotorcraft of claim 10, wherein the bubble form is configured to allow the window to remain secured in the window frame by the gasket at a sideslip angle of at least 6 degrees; or
the apparatus of claim 10, wherein the bubble form is configured to allow the window to remain secured in the airframe panel opening by the gasket at a sideslip angle of at least 6 degrees.

12. The rotorcraft of claim 11, wherein the bubble form is configured to allow the window to remain secured in the window frame by the gasket at a sideslip angle of at least 15 degrees; or
the apparatus of claim 11, wherein the bubble form is configured to allow the window to remain secured in the airframe panel opening by the gasket at a sideslip angle of at least 15 degrees.

13. The rotorcraft of claim 1 or of any preceding rotorcraft claim, wherein the window frame and the window are positioned proximate a pilot's seating position on the rotorcraft.

14. The apparatus of claim 7 or of any preceding apparatus claim, wherein the airframe panel is an exterior panel of a rotorcraft.

15. An emergency egress system for a rotorcraft, the emergency egress system comprising:
a window panel comprising a bubble form;
a gasket to secure the window in a window frame of an aircraft exterior panel, the gasket configured to permit the window panel to be pushed out of the aircraft exterior panel by a force in the range of 40 to 55 pound-force (lbf) at static equilibrium and secure the window panel in the aircraft exterior panel at a level cruising speed of 120 knots true airspeed.
